# DEMANDE DE BREVET EUROPEEN

(11) **EP 4 040 019 A1**
(43) Date de publication de la demande: **10.08.2022**
(21) Numéro de dépôt: 22154887.8
(22) Date de dépôt: 03.02.2022
(51) Int. Cl.: F16H 57/04, F02C 7/36

(54) **RÉDUCTEUR MÉCANIQUE**

(30) Priorité: 03.02.2021 FR 2101036
(71) Demandeur: Safran Transmission Systems, 92700 Colombes (FR)
(72) Inventeur: MOULY, Guillaume Pierre, 77550 MOISSY-CRAMAYEL (FR); LAISNEZ, Frédéric Nicolas François, 77550 MOISSY-CRAMAYEL (FR); SIMON, Adrien Louis, 77550 MOISSY-CRAMAYEL (FR)
(74) Mandataire: Regimbeau

(57) **Abrégé**

La présente invention concerne un réducteur (6) mécanique de turbomachine, en particulier d'aéronef, ce réducteur (6) comportant :
- un solaire s'étendant autour d'un axe (61) de rotation,
- une couronne qui s'étend autour du solaire et qui est configurée pour être immobile en rotation autour dudit axe (61),
- des satellites qui sont engrenés avec le solaire et la couronne et qui sont maintenus par un porte-satellites (62) qui est configuré pour être mobile en rotation autour dudit axe (61),
- un distributeur (65) d'huile de lubrification.

De plus, le distributeur (65) d'huile comprend une pluralité de modules (67) de distribution d'huile assemblés ensemble , chaque module (67) comprenant au moins une canalisation (68) de lubrification présentant une entrée destinée à recevoir de l'huile et une sortie (69) adaptée pour faire déboucher l'huile dans une ouverture (63) du porte-satellites (62), l'ouverture (63) étant destinée à la lubrification du réducteur.

## Description

### DOMAINE DE L'INVENTION

La présente invention concerne le domaine des réducteurs mécaniques pour des turbomachines en particulier d'aéronef.

### ETAT DE LA TECHNIQUE

D'une manière connue, le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé fan). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou compound.
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Il existe plusieurs types d'engrènement par contact comme avec des dentures droites, hélicoïdales ou en chevron.

Les réducteurs ont un besoin d'apport d'huile pour lubrifier et refroidir les engrenages, cannelures, roulements et paliers. Dans le cas où le porte-satellites est tournant, l'huile au niveau des paliers de satellites ou des engrènements doit être appliquée dans un champ tournant. Il existe donc un besoin de transférer l'huile du réservoir situé sur une partie stator vers le porte-satellites tournant. Ce transfert est couramment réalisé par le biais d'un OTB (Oil Transfert Bearing)

La présente invention propose un perfectionnement simple, efficace et économique, de cette technologie.

### EXPOSE DE L'INVENTION

Selon un premier aspect, l'invention propose un réducteur mécanique de turbomachine, en particulier d'aéronef, ce réducteur comportant :
- un solaire ayant un axe de rotation,
- une couronne qui s'étend autour du solaire et qui est configurée pour être immobile en rotation autour dudit axe,
- des satellites qui sont engrenés avec le solaire et la couronne et qui sont maintenus par un porte-satellites qui est configuré pour être mobile en rotation autour dudit axe (61),
- un distributeur d'huile de lubrification.

De plus, le distributeur d'huile comprend une pluralité de modules de distribution d'huile, distincts, lesdits modules étant assemblés à l'extérieur du porte-satellites de sorte à former ensemble un distributeur 65, chaque module comprenant au moins une canalisation de lubrification présentant une entrée destinée à recevoir de l'huile et une sortie adaptée pour faire déboucher l'huile dans une ouverture du porte-satellites, l'ouverture étant destinée à la lubrification du réducteur.

D'une manière particulièrement avantageuse, le distributeur selon l'invention permet un apport d'huile dans un champ tournant. La structure modulaire du distributeur permet que cet apport soit peu impactant sur la structure tout en étant facile à monter.

Chaque module peut comprendre une pluralité de canalisations.

Plusieurs canalisations d'un même module peuvent présenter des diamètres différents.

Plusieurs canalisations d'un même module peuvent présenter au moins deux orientations différentes.

Le porte-satellites peut présenter une pluralité d'ouvertures équiréparties.

Le porte-satellites comprend un nombre d'ouvertures défini par n fois le nombre de satellite.

Le distributeur peut être est maintenu entre le porte-satellites et un écrou.

La sortie de chaque canalisation peut comprendre des moyens d'étanchéité, les moyens d'étanchéité comprenant au moins un joint torique permettant d'assurer l'étanchéité d'une liaison de la sortie avec chaque ouverture correspondante.

Les moyens d'étanchéité peuvent comprendre une combinaison de deux joints toriques et d'un labyrinthe radial ou une bobine comprenant un double joint torique et un frettage.

Selon un autre aspect, l'invention concerne un procédé d'assemblage d'un réducteur selon l'invention. Le procédé comprend au moins les étapes suivantes :
- positionnement de l'écrou sur l'axe ;
- introduction des extrémités distales dans les ouvertures correspondantes du porte-satellites ;
- rotation de chaque module pour les assembler les uns aux autres entre le porte-satellites et l'écrou ;
- serrage de l'écrou.

### DESCRIPTION DES FIGURES

D'autres caractéristiques, buts et avantages de l'invention ressortiront de la description qui suit, qui est purement illustrative et non limitative, et qui doit être lue en regard du dessin annexé sur lequel :
La figure 1 est une vue schématique en coupe axiale d'une turbomachine utilisant l'invention.
La figure 2 est une représentation en perspective d'un réducteur selon l'invention.
La figure 3 est une représentation d'un distributeur selon l'invention.
La figure 4 est une représentation, en perspective, d'un module d'un distributeur selon l'invention.
La figure 5 est une représentation d'une sortie d'une canalisation d'un distributeur selon un mode de réalisation de l'invention.
La figure 6 est une représentation d'une sortie d'une canalisation d'un distributeur selon un mode de réalisation de l'invention.
La figure 7 est une représentation d'une sortie d'une canalisation d'un distributeur selon un mode de réalisation de l'invention.
La figure 8 est une représentation schématique d'une étape de montage d'un réducteur selon l'invention.
La figure 9 est une représentation schématique d'une étape de montage d'un réducteur selon l'invention.
La figure 10 est une représentation schématique d'une étape de montage d'un réducteur selon l'invention.
La figure 11 est une représentation schématique d'une étape de montage d'un réducteur selon l'invention.

### DESCRIPTION DETAILLEE DE L'INVENTION

### Turbomachine

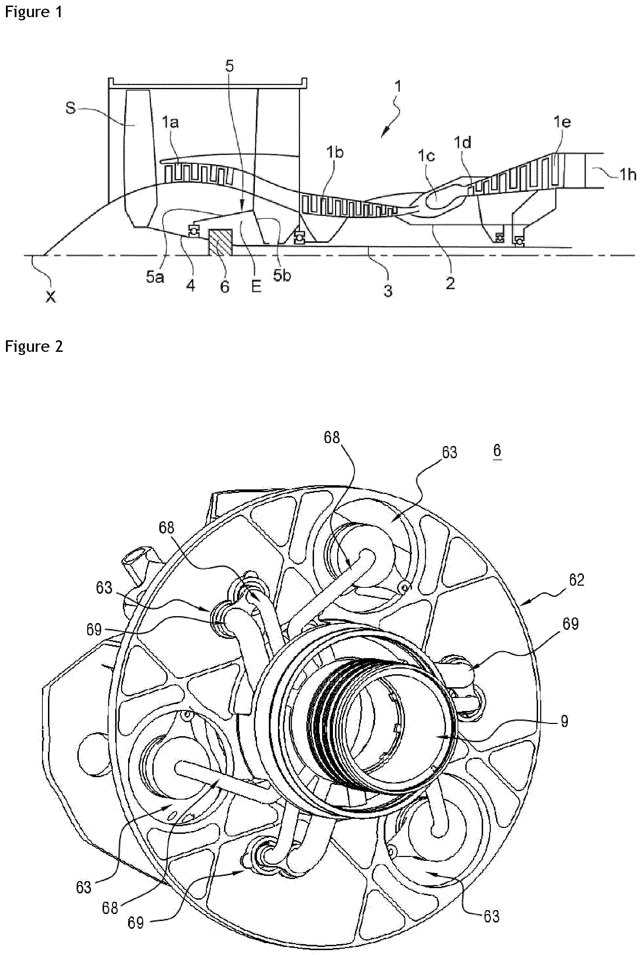

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

### Réducteur

En référence à la figure 2, le réducteur 6 comporte :
- un solaire ayant un axe 61 de rotation,
- une couronne qui s'étend autour du solaire et qui est configurée pour être immobile en rotation autour dudit axe 61,
- des satellites qui sont engrenés avec le solaire et la couronne et qui sont maintenus par un porte-satellites 62 qui est configuré pour être mobile en rotation autour dudit axe 62,
- un distributeur 65 d'huile de lubrification,

En outre, le distributeur 65 d'huile comprend une pluralité de modules 67 de distribution d'huile assemblés ensemble, chaque module 67 comprenant au moins une canalisation 68 de lubrification présentant une entrée destinée à recevoir de l'huile et une sortie 69 adaptée pour faire déboucher l'huile dans une ouverture 63 du porte-satellites 62, l'ouverture 63 étant destinée à la lubrification du réducteur.

D'une manière particulièrement avantageuse, le distributeur selon l'invention permet un apport d'huile dans un champ tournant. La structure modulaire du distributeur permet que cet apport soit peu impactant sur la structure tout en étant facile à monter.

D'une manière préférentielle, le porte-satellites 62 présente une pluralité d'ouvertures 63 équirépartie. Préférentiellement, le porte-satellites 62 comprend un nombre d'ouvertures défini par n fois le nombre de satellite.

Selon une disposition préférentielle, le porte-satellites 62 est monobloc.

### Distributeur

Le distributeur 65 permet d'assurer une liaison fluidique entre un OTB 9 et le porte-satellites 62. En d'autres termes, le distributeur 65 permet un transfert d'huile de l'OTB 9 vers le porte-satellites 62.

Comme indiqué précédemment, le distributeur 65 comprend une pluralité de modules 67 assemblés les uns aux autres. En d'autres termes, le distributeur 65 est un kit de plusieurs modules 67 distincts qui sont assemblés pour former ensemble un distributeur 65.

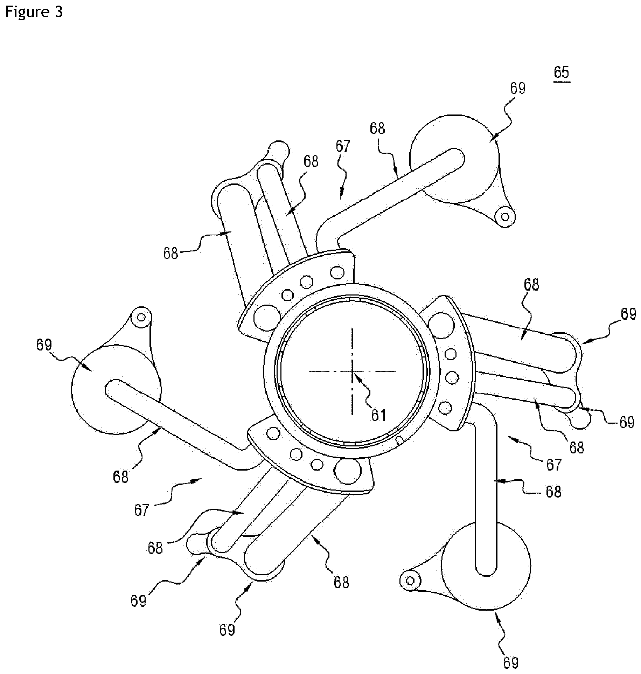

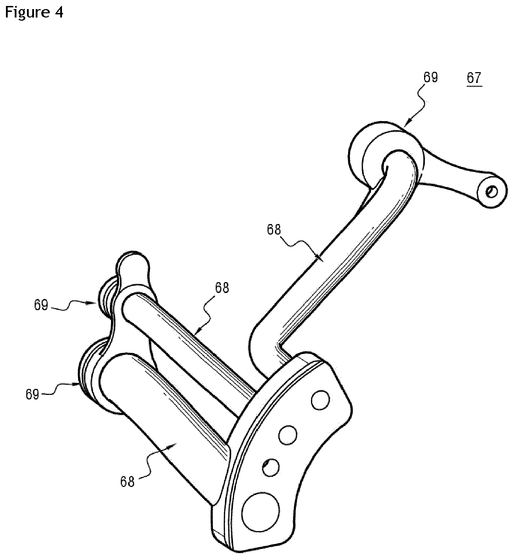

Chaque module 67 comprend au moins une canalisation 68 permettant d'introduire de l'huile dans le porte-satellites 62. Comme cela est représenté, sur les figures, chaque module 67 peut présenter plusieurs canalisations 68. Tel que représenté sur les figures 3 et 4, les différentes canalisations 68 d'un même module 67 peuvent présenter des orientations différentes. De même, les canalisations 68 d'un même module 67 peuvent présenter des diamètres différents. Typiquement, le diamètre d'une canalisation 68 peut être dicté par la quantité et la pression de l'huile qui doit y transiter.

Comme indiqué précédemment, chaque canalisation 68 présente une sortie 69 qui est destinée à être introduite dans une ouverture 63 correspondante du porte-satellite. La sortie 69 peut comprendre des moyens d'étanchéité, les moyens d'étancheité comprenant au moins un joint torique 72 permettant d'assurer l'étanchéité d'une liaison de la sortie 69 avec l'ouverture 63.

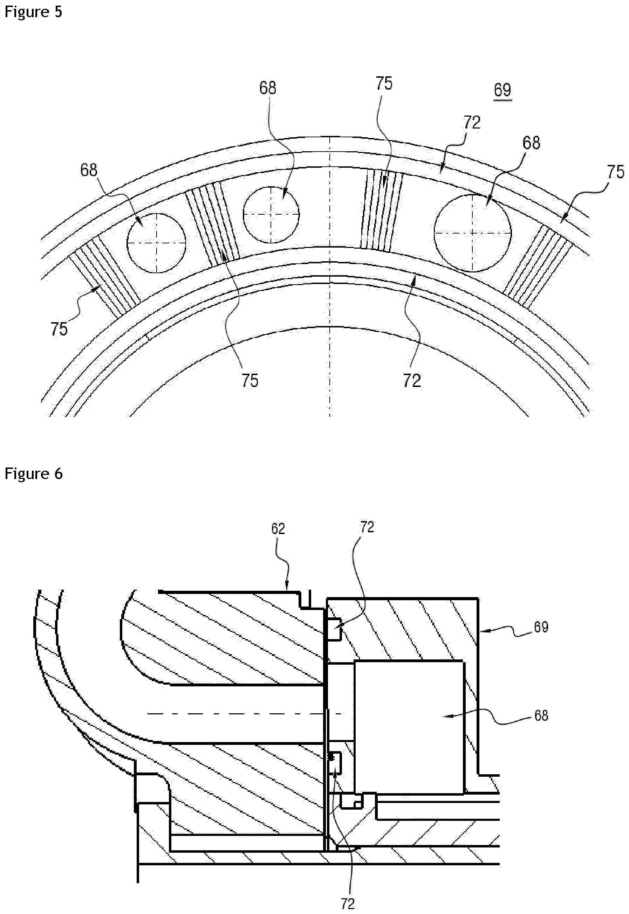

Selon un autre mode de réalisation, représenté en figure 5 et 6, les moyens d'étanchéité peuvent comprendre une combinaison de deux joints toriques 72 et d'un labyrinthe radial 75. Les joints toriques 72 permettent de garantir une étanchéité entre la sortie 69 et l'extérieur. Les labyrinthes 75 permettent d'assurer une étanchéité entre les différentes canalisations 68.

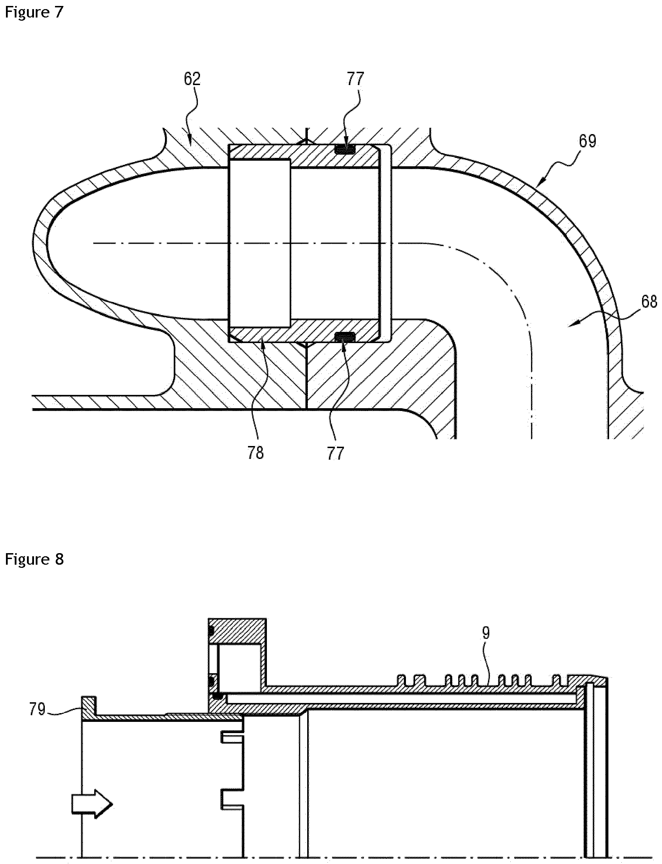

Selon un autre mode de réalisation, représenté en figure 7, la sortie 69 peut présenter une combinaison de deux joints toriques 72 et d'un labyrinthe radial 75 ou une bobine 76 comprenant un double joint torique 77 et un frettage 78. Il est précisé que la bobine 76 peut être une portion de cylindre encastrée dans la sortie 69 et liée de manière étanche à la sortie 69 grâce au double joint torique 77. La bobine est frettée dans l'ouverture 63, le frettage permettant aussi de garantir l'étanchéité de la liaison Cette disposition permet de combiner l'étanchéité et la tenue mécanique. Le frettage est une disposition particulièrement intéressante car cette liaison nécessite peu de moyens mécaniques tout en étant suffisamment robuste. En effet, comme indiqué précédemment, le distributeur 65 exerce très peu d'effort sur le porte-satellites 62. Dans ce contexte, le frettage est donc une solution de liaison suffisante et particulièrement adaptée.

En sus, les différents modules 67 peuvent être assemblés les uns aux autres par des boulons.

D'une manière préférentielle, le distributeur 65 est maintenu entre le porte-satellites 62 et un écrou 79.

Cette solution permet de totalement différentier la partie structurelle de la partie circuit d'huile et ainsi de laisser libre court au choix des matériaux, procédé de fabrication et géométrie, sans apporter un encombrement axial supplémentaire. Typiquement, les modules du distributeur 65 peuvent être réalisés par fabrication additive.

### Procédé d'assemblage

Selon un autre aspect, l'invention propose un procédé d'assemblage d'un réducteur 6 selon l'invention.

Le procédé peut comprendre au moins les étapes suivantes :
- positionnement de l'écrou 79 sur l'axe 61 ;
- introduction des extrémités distales 69 dans les ouvertures correspondantes du porte-satellites 62 ;
- rotation de chaque module 67 pour les assembler les uns aux autres entre le porte-satellites 62 et l'écrou 79 ;
- serrage de l'écrou 79.

Plus précisément, en référence à la figure 8, l'écrou 79 est tout d'abord vissé sur l'OTB 9.

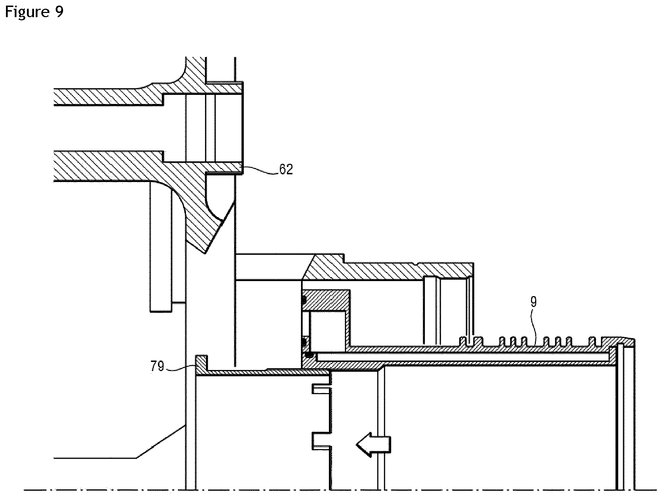

Puis, comme cela est représenté sur la figure 9, l'ensemble écrou 79 et OTB 9 est engagé contre le porte-satellites 62.

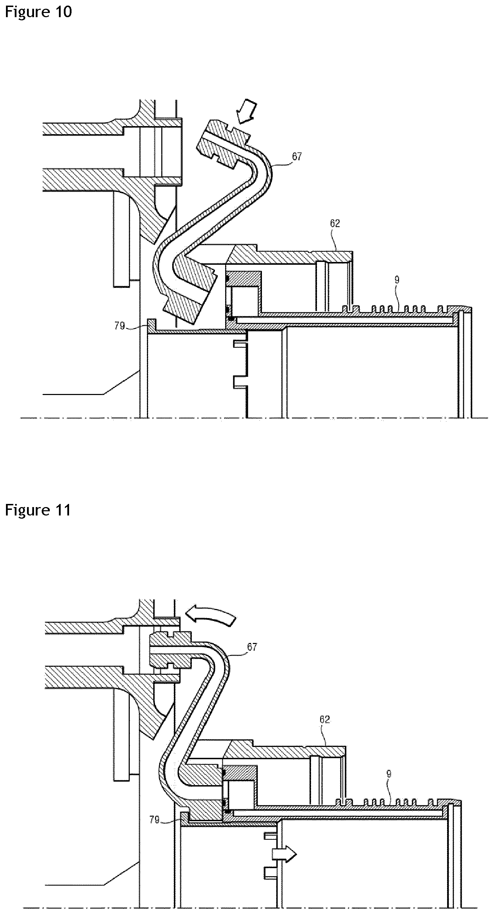

Chaque module 67 est ensuite engagé dans le porte-satellites 62. Comme représenté sur la figure 10, chaque module est engagé incliné (c'est-à-dire selon une direction sécante des directions axiale et radiale).

Puis, en référence à la figure 11, chaque module est rabattu pour que la sortie 69 soit enclenchée dans une ouverture 63, et que la liaison fluidique entre l'OTB 9 et le porte-satellites 62 soit assurée.

Enfin, l'écrou 79 est serré pour garantir le maintien des modules 67.

Les modules 67 peuvent aussi être boulonnés les uns aux autres.

On comprend donc bien que la structure modulaire du distributeur 65 permet un assemblage simple, qui ne nécessite pas de démontage du porte-satellites 62.

## Revendications

1. Réducteur (6) mécanique de turbomachine, en particulier d'aéronef, ce réducteur (6) comportant :
- un solaire s'étendant autour d'un axe (61) de rotation,
- une couronne qui s'étend autour du solaire et qui est configurée pour être immobile en rotation autour dudit axe (61),
- des satellites qui sont engrenés avec le solaire et la couronne et qui sont maintenus par un porte-satellites (62) qui est configuré pour être mobile en rotation autour dudit axe (61),
- un distributeur (65) d'huile de lubrification,
**caractérisé en ce que** le distributeur (65) d'huile comprend une pluralité de modules (67) de distribution d'huile distincts, lesdits modules étant assemblés à l'extérieur du porte-satellites des sorte à former ensemble un distributeur 65, chaque module (67) comprenant au moins une canalisation (68) de lubrification présentant une entrée destinée à recevoir de l'huile et une sortie (69) adaptée pour faire déboucher l'huile dans une ouverture (63) du porte-satellites (62), l'ouverture (63) étant destinée à la lubrification du réducteur.

2. Réducteur (6) selon la revendication 1, dans lequel chaque module (67) comprend une pluralité de canalisations (68).

3. Réducteur (6) selon a revendication 2, dans lequel plusieurs canalisations (68) d'un même module (67) présentent des diamètres différents.

4. Réducteur (6) selon l'une des revendications 2 ou 3, dans lequel plusieurs canalisations (68) d'un même module (67) présentent au moins deux orientations différentes.

5. Réducteur (6) selon l'une quelconque des revendications précédentes, dans lequel le porte-satellites (62) présente une pluralité d'ouvertures (63) équiréparties.

6. Réducteur (6) selon la revendication 5 dans lequel le porte-satellites (62) comprend un nombre d'ouvertures (63) défini par n fois le nombre de satellite.

7. Réducteur (6) selon l'une quelconque des revendication 1 à 6, dans lequel la sortie (69) de chaque canalisation (68) comprend des moyens d'étanchéité, les moyens d'étanchéité comprenant au moins un joint torique (72) permettant d'assurer l'étanchéité d'une liaison de la sortie (69) avec chaque ouverture (63) correspondante.

8. Réducteur (6) selon la revendication 7, dans lequel les moyens d'étanchéité comprennent une combinaison de deux joints toriques (72) et d'un labyrinthe radial (75) ou une bobine (76) comprenant un double joint torique (77) et un frettage (78).

9. Réducteur (6) selon l'une quelconque des revendications 1 à 8, dans lequel le distributeur (65) est maintenu entre le porte-satellites (62) et un écrou (79).

10. Procédé d'assemblage d'un réducteur (6) selon la revendication 9, **caractérisé en ce qu'**il comprend au moins les étapes suivantes :
- positionnement de l'écrou (79) sur l'axe (61) ;
- introduction des sorties (69) dans les ouvertures (63) correspondantes du porte-satellites (62) ;
- rotation de chaque module (67) pour les assembler les uns aux autres entre le porte-satellites (62) et l'écrou (79) ;
- serrage de l'écrou (79).
